# EUROPÄISCHE PATENTSCHRIFT

(11) **EP 0 493 493 B1**
(45) Veröffentlichungstag und Bekanntmachung des Hinweises auf die Patenterteilung: **30.11.1994**
(21) Anmeldenummer: 90914703.5
(22) Anmeldetag: 07.09.1990
(51) Int. Cl.: B60T 8/32

(54) **ANTIBLOCKIERREGELSYSTEM**
ANTILOCK BRAKING SYSTEM
SYSTEME DE REGULATION ANTIBLOCAGE

(30) Priorität: 20.09.1989 DE 3931313
(43) Veröffentlichungstag der Anmeldung: 08.07.1992
(73) Patentinhaber: ROBERT BOSCH GMBH, 70442 Stuttgart (DE)
(72) Erfinder: MÜLLER, Werner, Nishi-ku F 220 Yokohama-shi (JP); MÜLLER, Elmar, D-7145 Markgröningen (DE)
(86) Internationale Anmeldenummer: EP9001509
(87) Internationale Veröffentlichungsnummer: WO9104179

(56) Entgegenhaltungen:
- WO-A-88/06544
- GB-A- 2 134 200
- US-A- 3 762 774
- PATENT ABSTRACTS OF JAPAN, vol. 12, no. 378 (M-751)(3225) 11 October 1988, & JP-A- 63 130460 (NIPPON) 02 Juni 1988

## Beschreibung

### Stand der Technik

Ein Antiblockierregelsystem mit den Merkmalen des Oberbegriffs ist aus der WO88/06544 Fig. 7 und 8 mit zugehöriger Beschreibung bekannt. Es wird hier neben der Hilfsreferenzgröße zur Fahrtenverzögerungsermittlung noch eine Referenzgröße für die Schlupfbildung gewonnnen.

### Vorteile der Erfindung

Die Erfindung geht von der bekannten Referenzgrößenbildung aus, überträgt sie auf den Sonderfall Motorrad und ändert sie so ab, daß sie im Sonderfall Motorrad anwendbar ist.

Bei der Erfindung folgen die Referenzgrößen dem jeweiligen Rad mit einer Steigung, die sich aus einer errechneten Fahrzeugverzögerung und einem vom Fahrzustand abhängigen Multiplikator ergibt. Aufgrund dieser Funktion kann sich die einzelne radspezifische Referenz von der Hilfsreferenzgröße unter bestimmten Umständen ablösen. Dies ist dann erforderlich, wenn nur eine Bremse betätigt wird. In diesem Fall liegt die Referenzgröße unter der Fahrzeuggeschwindigkeit, während die Hilfsreferenzgröße durch das nicht gebremste zweite Rad praktisch gleich der tatsächlichen Geschwindigkeit ist. Es wird somit für das geregelte Rad ein Schlupf errechnet, der wieder in der gleichen Größenordnung wie beim bekannten ABS-Systemen liegt und es können die herkömmlichen Algorithmen zur Regelung angewendet werden.

Damit das Rad sich jedoch nicht zu weit von der echten Fahrzeuggeschwindigkeit entfernt, was im Extremfall zum Blockieren führen kann, wird die zulässige Abweichung der Referenzgröße von der Hilfsreferenzgröße auf einen bestimmten Prozentsatz (z.B 6%) bzw. eine maximale Abweichung (z.B. 5 km/h) begrenzt.

Diese zulässige Abweichung hängt gemäß den Ansprüchen 2 und 3 ihrerseits wiederum vom Zustand des Systems ab: wenn sich beide Räder in einer Regelung befinden, wird keine Abweichung zugelassen, denn dies entspricht wiederum dem bekannten Fall der "normalen" Bremsbetätgung aller Räder (wie PKW). Weiterhin wird diese Abweichung bei Verzögerungen kleiner -0.3 g nicht erlaubt, um auch bei Einradregelung auf niedrigen Reibwerten sehr empfindlich auf Schlupf regeln zu können.

Es ergeben sich folgende Vorteile gegenüber dem Stand der Technik:
Bei Einradregelungen kann das entsprechende Rad optimal gebremst werden. Ein herkömmliches Verfahren mit einer gemeinsamen fahrzeugbezogenen Schlupfreferenz würde zu einer Unterbremsung führen. Insbesondere bei allein geregeltem Hinterrad kann bei zu empfindlicher Regelung die erreichbare Verzögerung auf hohen Reibwerten unter die gesetzliche Mindestverzögerung von 0.3 g fallen. Die wird mit beschriebenen Verfahren vermieden. Gleichzeitig wird eine auf niedrigen Reibwerten notwendige sehr empfindliche Regelung ermöglicht. Es ist bei der Erfindung möglich, sowohl bei einzeln, als auch bei gemeinsam gebremsten Rädern, die gleichen ABS-Regelalgorithmen, wie sonst üblich, anzuwenden.

### Figurenbeschreibung

Anhand der Zeichnung soll an einem Ausführungsbeispiel die Erfindung näher erläutert werden.

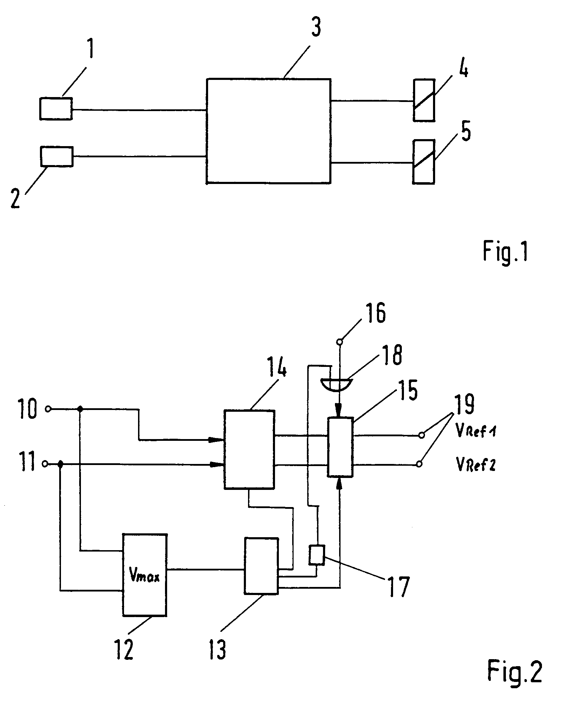

Fig. 1 zeigt ein Motorrad-ABS in Prinzipdarstellung. Zwei den beiden Rädern zugeordnete Meßwertgeber sind mit 1 und 2 bezeichnet. Deren Signale werden einer Auswerteschaltung 3 zugeführt, die in Abhängigkeit vom Bewegungsverhalten des einzelnen Rads Steuersignale für den Rädern zugeordnete Bremsdrucksteuerventilen 4 und 5 erzeugt. Bei Motorrädern ist zu beachten, daß die einzelnen Räder über getrennt betätigbare Bremsen gebremst werden.

Bei der Bremsdruckregelung soll auch der Radschlupf als Regelgröße in bekannter Weise mit verwendet werden. Zur Bestimmung des Radschlupfs wird eine dem Verlauf der Fahrzeuggeschwindigkeit angenäherte Referenzgröße benötigt. Deren Bildung wird anhand der Fig. 2 erläutert.

An Klemmen 10 und 11 werden Radgeschwindigkeitssignale V_{R1} und V_{R2} zugeführt. Ein Block 12 wählt das größere Signal aus und gibt dieses Signal an einem Block 13, der hieraus die Hilfsreferenzgröße bildet, deren Steigung bestimmt und diese an einen Block 14 weitergibt. Diesem werden die beiden Radgeschwindigkeitssignale V_{R1} und V_{R2} zugeführt, und er bildet unter Zuhilfenahme der zugeführten Steigung der Hilfsreferenzgröße die beiden Referenzsignale für die Schlupfbestimmung; dies bedeutet, daß bei einen Radgeschwindigkeitseinbruch die Referenzgröße jeweils nur mit der Hilfsreferenzsteigung der Radgeschwindigkeit folgt, daß jedoch, sobald die Radgeschwindigkeit die Referenzgeschwindigkeit wieder erreicht, die Radgeschwindigkeit den Referenzgeschwindigkeitsverlauf bestimmt. Die so gebildeten Referenzgrößen V_{Ref1} und V_{Ref2} für die beiden Räder werden in einem Begrenzer 15 noch begrenzt: hierzu wird dem Begrenzer noch die im Block 13 vorhandenen Hilfsreferenzgröße V'_{Ref} zugeführt. Normalerweise verhindert der Begrenzer 15, daß die Referenzgrößen V_{Ref1} und V_{Ref2} um mehr als einen vorgegebenen Betrag (z.B. 5 km/h) oder einen vorgegebenen Prozentsatz (z.B. 6 %) von der Hilfsreferenzgröße abweicht. Der Begrenzer ist noch auf einen Abweichung 0 umschaltbar; diese Umschaltung wird bewirkt, wenn die Auswerteschaltung 3 der Fig. 1 über eine Klemme 16 signalisiert, daß die Regelung an beiden Rädern in Betrieb ist und/oder wenn die durch der Hilfsreferenzsteigung gegebene Fahrzeugverzögerung einen in einem Vergleicher 17 vorgegebenen Wert der Fahrzeugverzögerung (von z.B. -0,3 g) unterschreitet und dann die Umschaltung über ein Oder-Gatter 18 auslöst. An den Klemmen 19 stehen dann die gewünschten Referenzgrößen V_{Ref1} und V_{Ref2} zur Verfügung.

## Patentansprüche

1. Antiblockierregelsystem für ein Fahrzeug enthaltend zwei Meßwertgeber (1, 2) für die Radgeschwindigkeit, eine Auswerteschaltung (3) und zwei Bremsdrucksteuereinheiten (4, 5) zur Variation des Bremsdrucks in Abhängigkeit von Bewegungsverhalten der Fahrzeugräder, wobei in der Auswerteschaltung (in 14) zur Schlupfregelung eine dem Verlauf der Fahrzeuggeschwindigkeit angenäherte Referenzgröße V_{Ref1} dadurch gebildet wird, daß mit Hilfe des am schnellsten drehenden Rads (V_{R2}, V_{R1}) eine Hilfsreferenzgröße V'_{Ref} gebildet wird, deren Steigung bei Drehzahleinbruch die Steigung der Referenzgröße V_{Ref1} bestimmt, wobei zur Bildung der Referenzgröße V_{Ref1} die Geschwindigkeit des langsameren Rads (V_{R2}, V_{R1}) dient, dadurch gekennzeichnet, daß das Fahrzeug ein Zweiradfahrzeug ist, daß unter Verwendung der Steigung der Hilfsreferenzgröße V'_{Ref} und des Radgeschwindigkeitssignals (V_{R1} oder V_{R2}) des schnellsten Rads eine zweite Referenzgröße V_{Ref2} gebildet wird (in 14), daß die beiden Referenzgrößen zur Schlupfbestimmung am zugehörigen Rad verwendet werden (in 3) und daß die Abweichung der Referenzgrößen V_{Ref1} und V_{Ref2} von der Hilfsreferenz V'_{Ref} in Betrag oder Prozentsatz auf einen zulässigen Wert begrenzt wird (in 15).

2. Antiblockierregelsystem nach Anspruch 1, dadurch gekennzeichnet, daß die zulässige Abweichung zu 0 gemacht wird (in 15), wenn an beiden Rädern eine Regelung stattfindet (über Klemme 16, Oder-Gatter 18).

3. Antiblockierregelsystem nach Anspruch 1 oder 2, dadurch gekennzeichnet, daß die zulässige Abweichung zu 0 gemacht wird (in 15), wenn die sich aus der Steigung der Hilfsreferenzgröße ergebende Fahrzeugverzögerung (ermittelt in 13) einen vorgebenen Wert (z. B. 0,3 g) unterschreitet (Komparator 17, Oder-Gatter 18).

## Claims

1. Anti-lock brake system for a vehicle containing two measurement signal generators (1, 2) for the wheel speed, an analysis circuit (3) and two brake pressure control units (4, 5) for varying the brake pressure as a function of motion behaviour of the vehicle wheels wherein, for closed-loop slip control , a reference parameter V_{Ref1} approximating to the curve of the vehicle speed is formed in the analysis circuit (in 14) by forming, using the wheel rotating fastest (V_{R2}, V_{R1}), an auxiliary reference parameter V'_{Ref} whose slope determines the slope of the reference parameter V_{Ref1} in the case of a collapse of rotational speed, the speed of the slower wheel (V_{R2}, V_{R1}) being used to form the reference parameter V_{Ref1}, characterized in that the vehicle is a two-wheel vehicle, that a second reference parameter V_{Ref2} is formed (in 14) by using the slope of the auxiliary reference parameter V'_{Ref} and the wheel speed signal (V_{R1} or V_{R2}) of the fastest wheel, that the two reference parameters are used (in 3) to determine the slip at the associated wheel and that the deviation of the reference parameters V_{Ref1} and V_{Ref2} from the auxiliary reference V'_{Ref} is limited (in 15) to a specified amount in magnitude or percentage .

2. Anti-lock brake system according to Claim 1, characterized in that the permissible deviation is reduced to 0 (in 15) if control is being exercised at both wheels (via terminal 16, OR gate 18).

3. Anti-lock brake system according to Claim 1 or 2, characterized in that the permissible deviation is reduced to 0 (in 15) if the vehicle deceleration (determined in 13) obtained from the gradient of the auxiliary reference variable falls below a specified value (e.g. 0.3 g) (comparator 17, OR gate 18).

## Revendications

1. Système de régulation anti-blocage d'un véhicule comportant deux capteurs de valeur de mesure (1, 2) pour la vitesse des roues, un circuit d'exploitation (3) et deux unités de commande de pression de frein de roue (4, 5) pour modifier la pression de frein en fonction du comportement en mouvement des roues du véhicule, le circuit d'exploitation (dans 14) formant une grandeur de référence V_{ref1} voisine du tracé de la vitesse du véhicule et servant à la régulation du glissement en formant une grandeur de référence auxiliaire V'_{Ref} et à l'aide de la roue (V_{R2}, V_{R1}) tournant le plus rapidement, grandeur dont la pente définit en cas d'effondrement de la vitesse de rotation, la pente de la grandeur de référence V_{ref1}, et pour former la grandeur de référence V_{ref1}, il utilise la vitesse de la roue la plus lente (V_{R2}, V_{R1}), caractérisé en ce que le véhicule est un véhicule à deux roues et en ce qu'en utilisant la pente de la grandeur de référence auxiliaire V'_{Ref} et le signal de vitesse de roue (V_{R1} ou V_{R2}) de la roue la plus rapide, il forme une seconde grandeur de référence V_{ref2} (dans 14) et utilise les deux grandeurs de référence pour déterminer le glissement de la roue correspondante (dans 3) et il limite la déviation des grandeurs de référence V_{ref1} et V_{ref2} par rapport à la référence auxiliaire V'_{Ref} en valeur ou pourcentage jusqu'à une valeur autorisée (dans 15).

2. Système de régulation anti-blocage selon la revendication 1, caractérisé en ce qu'il rend égale à 0, la déviation autorisée (dans 15) lorsqu'il y a une action de régulation sur les deux roues (par la borne 16, la porte OU 18).

3. Système de régulation anti-blocage selon la revendication 1 ou 2, caractérisé en ce qu'il rend égale à 0, la déviation autorisée (dans 15) lorsque la décélération du véhicule (déterminée dans 13) résultant de la pente de la grandeur de référence auxiliaire, passe sous une valeur prédéterminée (par exemple 0,3 g) (comparateur 17, porte OU 18).
